Europäisches Patentamt

European Patent Office

Office européen des brevets

(19)

(11) Veröffentlichungsnummer : **0 004 281**
**B2**

(12) **NEUE EUROPÄISCHE PATENTSCHRIFT**

(45) Veröffentlichungstag der neuen Patentschrift :
11.04.84

(51) Int. Cl.³ : **B 29 F 3/00**

(21) Anmeldenummer : **79100465.8**

(22) Anmeldetag : **16.02.79**

(54) **Verfahren zum Regeln des Füllungsgrades eines Speichers in einer Fördereinrichtung eines Extruders und Vorrichtung zum Durchführen dieses Verfahrens.**

(30) Priorität : **28.03.78 DE 2813241**

(43) Veröffentlichungstag der Anmeldung :
**03.10.79 Patentblatt 79/20**

(45) Bekanntmachung des Hinweises auf die Patenterteilung : **04.03.81 Patentblatt 81/09**

(45) Bekanntmachung des Hinweises auf die Entscheidung über den Einspruch : **11.04.84 Patentblatt 84/15**

(84) Benannte Vertragsstaaten :
**BE CH FR GB IT NL SE**

(56) Entgegenhaltungen :
**DE-A- 1 813 421**
**DE-B- 2 544 609**
**US-A- 3 865 528**

(73) Patentinhaber : **MOOG GmbH**
**Hanns-Klemm-Strasse 28**
**D-7030 Böblingen (DE)**

(72) Erfinder : **Handte, Herbert**
**Scherlachstrasse 51**
**D-7024 Filderstadt 4 (DE)**

(74) Vertreter : **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P. Jakob, Dr. rer.**
**nat. G. Bezold Maximilianstrasse 58**
**D-8000 München 22 (DE)**

EP 0 004 281 B2

## Verfahren zum Regeln des Füllungsgrades eines Speichers in einer Fördereinrichtung eines Extruders und Vorrichtung zum Durchführen dieses Verfahrens

Die Erfindung bezieht sich auf ein Verfahren zum Regeln des Füllungsgrades eines Speichers in einer Fördereinrichtung eines Extruders gemäß dem Oberbegriff des Anspruchs 1, sowie auf eine Vorrichtung zum Durchführen des Verfahrens.

Um einen Blasformkörper herzustellen, wird in einem Extruder zuerst ein zylindrischer Vorformling gebildet, der in einem sich daran anschließenden Arbeitsgang in einer Blasform auf den gewünschten Außendurchmesser gebracht wird. In dem Extruder ist eine Fördereinrichtung vorgesehen, die das Material für den Blasformkörper in einem Speicher fördet, aus dem bei jedem Arbeitszyklus ein bestimmtes Volumen für die Blasform entnommen werden kann. Um die Maschine möglichst effizient auszunutzen, muß dafür gesorgt werden, daß das Material möglichst genau dann in die Form gegeben wird, sobald diese zur Aufnahme bereit ist. Dies bedeutet, daß die Fördermenge der Fördereinrichtung so eingestellt werden muß, daß in der zur Verfügung stehenden Zeit die benötigte Menge Material in den Speicher gefördert wird. Abweichungen der Fördermenge von der benötigten Sollfördermenge führen zu Nachteilen.

Bei einem bekannten Verfahren der eingangs genannten Art wird am Ende jedes Ausstoßvorgangs des Materials aus dem Speicher der Füllungsgrad des Speichers abgefragt. Wird eine Abweichung von einem vorgegebenen Sollfüllungsgrad festgestellt, wird die Fördermenge der Fördereinrichtung entsprechend erhöht, bzw. vermindert, indem die Drehzahl der Fördereinrichtung erhöht, bzw. erniedrigt wird.

Bei diesem bekannten Extruder dient ein Zylinder als Materialspeicher. Durch das geförderte Material wird ein in dem Zylinder angeordneter Kolben zurückgeschoben. Die Stellung des Kolbens und damit der Füllungsgrad am Anfang eines Ausstoßzyklus hängt dadurch von der Drehzahl der Fördereinrichtung ab. Die Regelung der Drehzahl erfolgt nach Maßgabe des festgestellten Füllungsgrades. Diese Regelung führt dann zu nachteiligen Schwingungen, d. h., Anfangs- und Endpunkt des Kolbenhubweges schwanken um einen Mittelwert, wenn das Ausstoßvolumen pro Zyklus konstant gehalten wird. Dies beeinträchtigt besonders bei großen Fördermengen ein einwandfreies Funktionieren der Maschine.

Bei einem anderen Verfahren, bei dem die Drehzahl einer Extruderfördereinrichtung nicht geregelt sondern manuell eingestellt wird, können zwar keine Schwingungen auftreten, jedoch müssen dafür andere Nachteile in Kauf genommen werden. Nach einem solchen Verfahren wird beim Ausstoßvorgang der Kolben des Speichers stets bis zu einer bestimmten Stelle geschoben. Ist hierbei die Extruderdrehzahl zu langsam eingestellt, muß eine Formwartezeit in Kauf genommen werden, da der Speicher bei Formbereitstellung noch nicht genügend gefüllt ist. Ist die Drehzahl zu hoch, wird der Speicher mehr als notwendig gefüllt und es wird deshalb, da der Schubkolben bis zu einer bestimmten Wegmarke vorgeschoben wird, zu viel Material ausgestoßen.

Der Erfindung liegt die Aufgabe zugrunde, ein Verfahren zum Regeln des Füllungsgrades eines Speichers in einer Fördereinrichtung eines Extruders der eingangs genannten Art anzugeben, welches ohne Schwingungseffekte arbeitet.

Ausgehend von einem Verfahren der eingangs genannten Art, wird diese Aufgabe erfindungsgemäß durch die im Kennzeichen des Anspruchs 1 angegebenen Merkmale gelöst.

Wurde bei dem bekannten Verfahren die Drehzahl der Fördereinrichtung des Extruders nur in Abhangigkeit vom Ist-Füllungsgrad des Speichers eingestellt, so sieht demgegenüber das erfindungsgemäße Verfahren vor, auch das tatsächliche Füllvolumen des Speichers mit als Regelgröße zu verarbeiten. Der Ist-Füllungsgrad leitet sich bei einem Speicher mit Ausstoßkolben aus der Endstellung des Kolbens vor Beginn des Ausstoßens ab, das Füllvolumen dagegen ergibt sich aus dem Rückführweg des Kolbens beim Wiederauffüllen des Speichers und dem Kolbenquerschnitt. Das erfindungsgemäße Verfahren verhindert ein Schwingen der Anordnung, wodurch ein einwandfreies Funktionieren des Extruders gewährleistet ist.

Eine vorteilhafte Weiterbildung des Verfahrens ist in Anspruch 2 angegeben. Besteht beispielsweise das Summensignal aus einer Spannung, so wird diese Spannung in ein entsprechend langes Zeitintervall umgewandelt. Während dieses Zeitintervalls wird die Drehzahl der Fördereinrichtung nachgestellt. Das Einstellen der Drehzahl erfolgt demnach proportional zu der Amplitude des Summensignals. Hierdurch wird eine schnelle und exakte Regelung gewährleistet.

Eine bevorzugte Weiterbildung der Erfindung ist in Anspruch 3 angegeben. Durch diese Maßnahme wird sichergestellt, daß keine Formwartezeiten auftreten, weil der Mindest-Füllungsgrad des Speichers mit Sicherheit erreicht wird, wenn die Form zur Aufnahme von Material bereitsteht.

Das in Anspruch 4 angegebene Verfahren ermöglicht ein einfaches Anfahren des Extruders. Durch die « UND » — Verknüpfung der beiden Bedingungen « Formbereitschaft » und « Mindestfüllungsgrad erreicht », kann beim Anfahren der Maschine die Form unabhängig vom Füllungsgrad des Speichers in Bereitstellung gebracht werden.

Eine Vorrichtung zum Durchführen des erfindungsgemäßen Verfahrens ist in Anspruch 5 angegeben. Bei der erfindungsgemäßen Vorrichtung sind nur relativ wenig Bauteile erforderlich. Der zur Gewinnung der Signale für den Ist-Füllungsgrad und das Füllvolumen erforderliche Positionsgeber ist in der Regel bei den in Frage kommenden Extrudern schon vorhanden ; er dient beispielsweise zum Erzeugen von Steuersignalen, die beim Formungsprozeß benötigt werden. Der Meßwandler zum Erzeugen des Speicher-Füllvolumen-Signals kann beispielsweise ein Integrator sein, der ein dem Weg des Ausstoßkolbens beim Füllen des Speichers entsprechendes Signal aufintegriert. Die erfindungsgemäße Vorrichtung kann leicht in bereits vorhandene Extruder eingebaut werden.

Im folgenden wird ein Ausführungsbeispiel der Erfindung anhand der Zeichnung näher erläutert. Es zeigen :

Figur 1 eine schematische Darstellung eines Extruders mit regelbarer Fördereinrichtung,

Figur 2 ein vereinfachtes Blockschaltbild eines Drehzahlreglers für die in Fig. 1 gezeigte Fördereinrichtung,

Figur 3 ein Zeitdiagramm zum Veranschaulichen der Regelung gemäß dem Stand der Technik, und

Figur 4 ein Zeitdiagramm, das das Regelverhalten gemäß der Erfindung verdeutlicht.

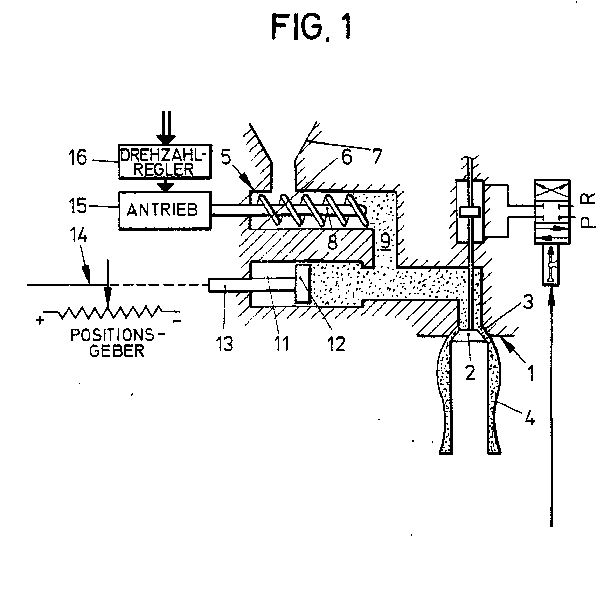

Der in Fig. 1 dargestellte Extruder enthält einen Werkzeugkopf 1 mit einem bewegbaren Dorn 2, der in dem Werkzeugkopf 1 je nach seiner axialen Stellung eine im Querschnitt veränderbare Austrittsöffnung 3 bildet, durch die ein plastifizierter extrudierbarer Werkstoff preßbar ist, um einen Vorformling 4 zu bilden. Dieser Vorformling 4 wird anschließend in einer nicht dargestellten Blasform zu dem gewünschten Erzeugnis, beispielsweise einer Flasche, geformt. Eine Plastifiziereinrichtung 5 ist mit einer geheizten Kammer 6 versehen, in die ein Werkstoffgranulat über einen Beschickungstrichter 7 eingebbar ist. In der Kammer 6 befindet sich eine drehbare Förderschnecke 8, die den durch Wärmeeinwirkung plastifizierten Werkstoff in einen Kanal 9 drückt. Der Kanal 9 mündet in einen Speicherzylinder 11, in dem ein Kolben 12 verschiebbar angeordnet ist. An der Kolbenstange 13 des Kolbens 12 ist ein Positionsgeber 14 angeordnet, der z. B. durch ein Potentiometer gebildet ist, mit dem die jeweilige axiale stellung des Kolbens 12 durch ein elektrisches Signal wiedergebbar ist.

Die Förderschnecke 8 wird durch einen Antriebsmotor 15 gedreht. Mit dem Antriebsmotor 15 steht ein Drehzahlregler 16 in Verbindung, durch den die Drehzahl des Antriebsmotors 15 veränderbar ist.

Der Extruder arbeitet wie folgt. Der Antriebsmotor 15 dreht die Förderschnecke 8 mit einer Geschwindigkeit, die von der ihm zugeführten Spannung abhängt. Diese Spannung wird durch den Drehzahlregler bestimmt. Angenommen, der Kolben 12 befinde sich nach einem Ausstoßvorgang in seiner rechten Stellung kurz vor der Einschnürung des Speichers 11. Die Austrittsöffnung 3 ist geschlossen. Durch den Kanal 9 wird der Werkstoff in den Speicher 11 gedrückt, wodurch der Kolben 12 mit der Kolbenstange 13 nach links geschoben wird. Bei dieser Bewegung wird über den Positionsgeber und einen nicht dargestellten Meßwandler ein Speicher-Füllvolumen-Signal erzeugt, welches das tatsächliche Füllvolumen repräsentiert. Weiterhin ist von dem Positionsgeber direkt ein für den Ist-Füllungsgrad des Speichers repräsentatives Signal abgreifbar. Erreicht dieses Signal einen vorbestimmten Wert, und ist die (nicht dargestellte) Form für die Materialaufnahme bereit, so wird der Kolben 12 durch eine nicht dargestellte Schubvorrichtung nach rechts gedrückt, während gleichzeitig die Austrittsöffnung 3 geöffnet wird. Die Werte des Füllvolumens und des Ist-Füllungsgrades werden dem Drehzahlregler 16 zugeführt, um dort weiterverarbeitet zu werden. Ein so gewonnenes Steuersignal wird dazu verwendet, die dem Antriebsmotor 15 zugeführte Spannung ggf. zu verändern, um den Materialdurchsatz durch den Kanal 9, der sich an die Förderschnecke anschließt, zu varieren.

In dem Drehzahlregler 16 werden die Signale für den Ist-Füllungsgrad und das jeweilige tatsächliche Füllvolumen des Speichers mit den voreingestellten Werten für den Soll-Füllungsgrad und das Ausstoßvolumen, welches entsprechend einer vorgegebenen Größe des Kolbenhubes gleichfalls einen vorbestimmten Wert besitzt, arithmetisch verknüpft, um ein Summensignal S gemäß folgender Formel zu erhalten :

$$S = \text{Ist-Füllungsgrad} - \text{Soll-Füllungsgrad} + \text{Füllvolumen} - \text{Ausstoßvolumen}.$$

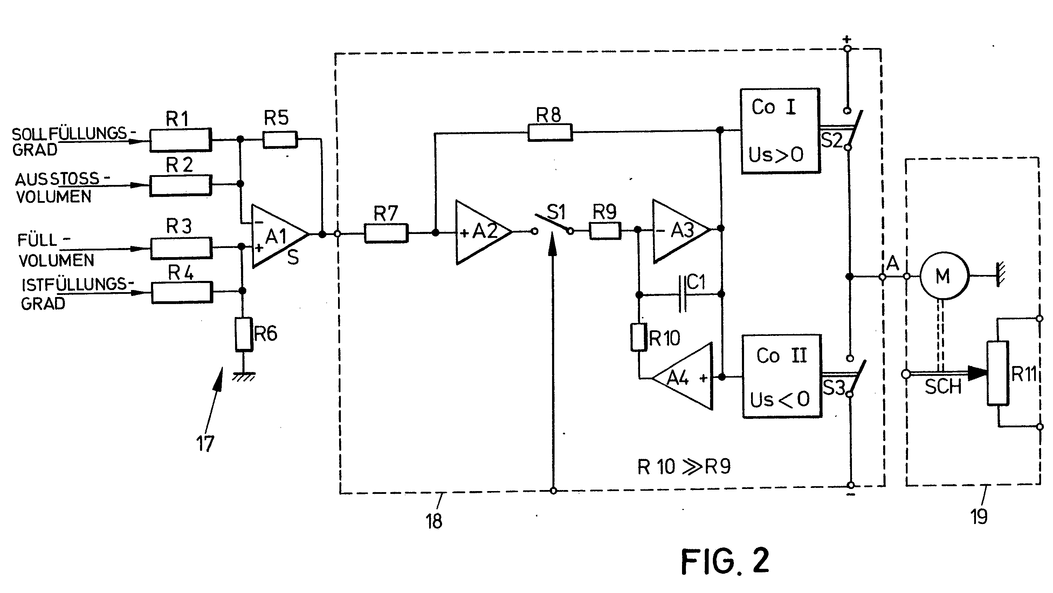

Anhand von Fig. 2 soll im folgenden der Drehzahlregler 16 näher erläutert werden. Er umfaßt eine aus einem Operationsverstärker A1 und Widerständen R1-R6 bestehende Summiereinrichtung. An den Minus-Eingang des Operationsverstärkers A1 sind zwei Widerstände R1 und R2 angeschlossen. Der Ausgang des Operationsverstärkers A1 ist mit dem Minus-Eingang über einen Widerstand R5 verbunden. Der Widerstand R1 wird von einem für den Soll-Füllungsgrad repräsentativen Signal beaufschlagt. Dieses kann beispielsweise von einem Potentiometer abgegriffen werden. Ebenfalls durch ein Potentiometer erzeugbar ist ein Signal für das Ausstoßvolumen, welches dem Widerstand R2 zugeführt wird. An den Plus-Eingang des Operationsverstärkers A1 sind zwei Widerstände R3 und R4 angeschlossen. Weiterhin liegt der Plus-Eingang über einen Widerstand R6 an Masse. Dem Widerstand R3 wird das oben erwähnte Signal für das Füllvolumen zugeführt, während dem Widerstand R4 das für den Ist-Füllungsgrad des Speichers repräsentative Signal zugeleitet wird. Durch diese Beschaltung des Operationsverstärkers A1 wird an dessen Ausgang das Summensignal S gemäß obiger Gleichung erhalten.

An den Ausgang der Summiereinrichtung 17 schließt sich ein Spannungs/Impulsdauer-Umsetzer 18 an. Ein Widerstand R7 liegt in Serie zu einem Operationsverstärker A2, einem Schalter S1, einem Widerstand R9 und einem Operationsverstärker A3. Mit dem Ausgang des Operationsverstärkers A3 ist der Eingang eines Operations-

verstärkers A4 verbunden, dessen Ausgang wiederum über einen Widerstand R10 mit dem Eingang des Operationsverstärkers A4 verbunden ist. Parallel zu dem Operationsverstärker A4 und dem Widerstand R10 ist ein Kondensator C1 geschaltet. Der Ausgang des Operationsverstärkers A3 steht mit dem jeweiligen Eingang eines ersten Komparators CO I und eines zweiten Komparators CO II in Verbindung. Weiterhin ist der Ausgang des Operationsverstärkers A3 über den Widerstand R8 mit der Verbindungsleitung des Widerstandes R7 und des Operationsverstärkers A2 verbunden. Die Größe des Widerstandes R10 ist wesentlich höher als der Widerstandes R9. Die Referenzspannung des Komparators CO I ist positiv ($U_s > 0$), während die Referenzspannung des Komparators CO II denselben Betrag hat, jedoch negatives Vorzeichen besitzt ($U_s < 0$). Die Ausgangssignale der Komparatoren CO I und CO II steuern jeweils einen Schalter S2, bzw. S3, von denen die beiden Schaltkontakte des einen Schalters S2 an eine positive Spannungsquelle bzw. den Ausgang A des Umsetzers 18 und die beiden Schaltkontakte des anderen Schalters S3 zwischen eine negative Spannungsquelle und den erwähnten Ausgang A angeschlossen sind. Wird der Schalter S2 durch ein Ausgangssignal des Komparators CO I geschlossen, wird dem Ausgang A des Umsetzers 18 somit ein positives Potential zugeführt, während durch Schließen des Schalters S3 dem Ausgang A ein negatives Potential zugeführt wird. Bei den Schaltern S2 und S3 handelt es sich vorzugsweise um Relais, während der Schalter S1 vorzugsweise als Feldeffekttransistor ausgebildet ist.

Mit dem Ausgang A des Umsetzers 18 steht der Eingang einer Servo-Steuereinrichtung 19 in Verbindung. Letztere umfaßt einen Motor M, der einen Schleifer SCH eines Potentiometers R11 in die eine oder andere Richtung bewegt, wenn ihm positives, bzw. negatives Potential zugeführt wird. Die an dem Potentiometer R11 abgegriffene Spannung wird dem Antriebsmotor 15 zugeführt.

Die in Fig. 2 gezeigte Schaltung arbeitet wie folgt. Am Ausgang der Summiereinrichtung, d. h. am Ausgang des Operationsverstärkers A1 wird ein Summensignal S nach obiger Gleichung erzeugt. Zu Beginn eines Ausstoßvorganges wird der Schalter S1 für ca. 10 ms geschlossen. Das Signal zum Schließen des Schalters S1 wird erhalten durch UND-Verknüpfung des Signals « Form bereit » und « Mindest-Füllungsgrad des Speichers erreicht ». Hierdurch kann z. B. beim Anfahren der Maschine die Form in Bereitstellung gebracht werden, ohne daß der Speicher schon gefüllt zu sein braucht. Das Schließen des Schalters S1 hat zur Folge, daß der Regelkreis A1, S1, R9, A3, R8 geschlossen wird. Demzufolge stellt sich am Ausgang von A3 eine dem Summensignal proportionale Spannung ein. Da der Wert des Widerstandes R10 wesentlich größer ist als der des Widerstandes R9, beeinflußt der durch den Widerstand R10 fließende Strom die sich am Ausgang von A3 einstellende Spannung nicht. Angenommen, das Summensignals S sei positiv. Dies bedeutet, daß die Drehzahl der Förderschnecke 8 zu hoch ist. In diesem Fall wird der Schalter S3 geschlossen und dem Motor M negatives Potential zugeführt. Nach Öffnen des Schalters S1 wird der auf die Ausgangsspannung von A3 aufgeladene Kondensator C1 über den Operationsverstärker A4 und den Widerstand R10 entladen. Hierdurch nimmt die Ausgangsspannung des Operationsverstärkers A3 bis auf Null ab. Unterschreitet der Betrag der Spannung die Schwellenspannung $U_s$ des Komparators CO II, so öffnet der Kontakt S3. In der Zeit zwischen Schließen und Öffnen des Schalters S3 bewegt der Motor den Schleifer SCH des Potentiometers R11, wodurch in diesem Fall die Drehzahl des Motorantriebes 15 verringert wird. Ist das Summensignal S negativ, so wird der Schalter S2 für eine bestimmte Zeitdauer geschlossen, was ein Erhöhen der Motordrehzahl zur Folge hat. Das Entladen des Kondensators C1 dauert um so länger, je größer der Betrag des Summensignals S ist. Dementsprechend wird der betreffende Schalter S2 oder S3 für eine mehr oder weniger lange Zeit geschlossen. Des Umsetzer 18 bewirkt also, daß dem Motor M der Servo-Steuereinrichtung 19 für eine bestimmte Zeitdauer ein Potential zugeführt wird. Die Zeitdauer hängt von der Amplitude des Summensignals S ab. Das Vorzeichen des Summensignals S bestimmt, in welche Richtung der Motor M gedreht wird, d. h. ob die Drehzahl des Antriebsmotors 15 und somit der Förderschnecke 8 erhöht, bzw. vermindert wird.

Durch Wahl der Referenzspannung $U_s$ der beiden Komparatoren läßt sich die Ansprechempfindlichkeit der Regeleinrichtung einstellen.

Wird die Referenzspannung $U_s$ relativ groß gewählt, so wird die Drehzahl des Motorantriebs bei kleinen Summensignalen nicht verändert.

Der der Summiereinrichtung zugeführte Wert des Soll-Füllungsgrades wird so eingestellt, daß er etwa 105 % des Mindest-Füllungsgrades des Speichers beträgt. Ist der Speicher bis zum Mindest-Füllungsgrad gefüllt, so entspricht das gespeicherte Volumen genau dem Ausstoßvolumen. Durch den Zuschlag von 5 % wird sichergestellt, daß vor jedem Ausstoßvorgang stets genug Material im Speicher 11 vorhanden ist.

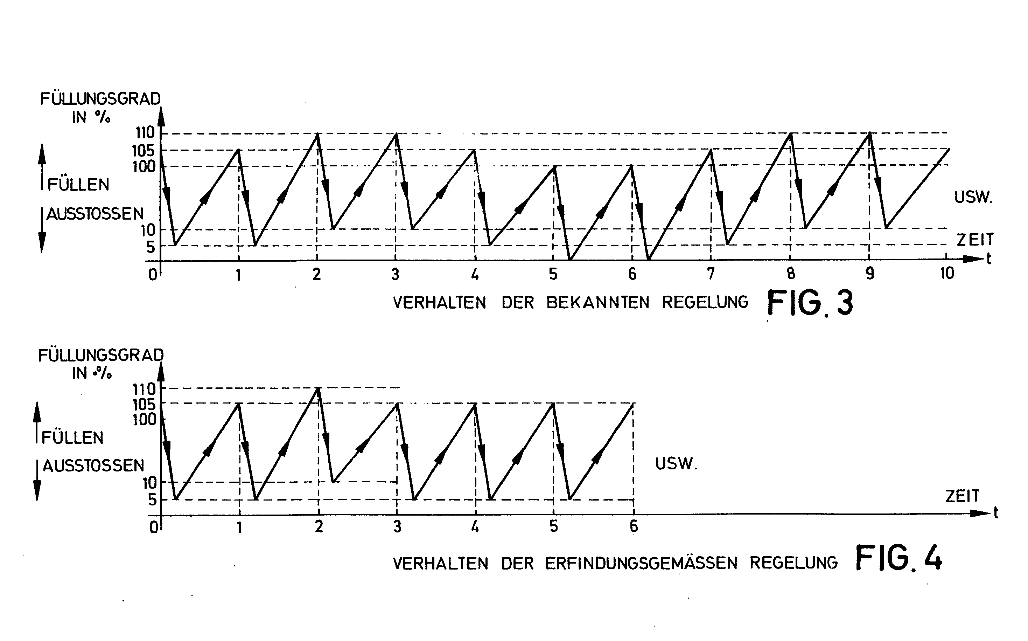

Im folgenden soll der Unterschied zwischen der erfindungsgemäßen Regelung und der bekannten Regelung anhand der Fig. 3 und 4 erläutert werden.

Zur Veranschaulichung sei angenommen, die Drehzahl der Fördereinrichtung wäre richtig eingestellt, und der Speicher werde bis zum Sollfüllungsgrad von beispielsweise 105 % gefüllt und bis auf 5 % ausgestoßen (s. Fig. 3 und 4). Die Differenz zwischen Ist-Füllungsgrad und Soll-Füllungsgrad ist Null, so daß beim bekannten Verfahren keine Korrektur der Drehzahl erfolgt. Da die Differenz zwischen Füllvolumen und Ausstoßvolumen ebenfalls Null ist, wird beim erfindungsgemäßen Verfahren das Summensignal S ebenfalls Null, so daß die Drehzahl auch hier nicht korrigiert wird.

Wird nun angenommen, daß aus irgendeinem Grund die Fördermenge der Fördereinrichtung trotz konstanter Drehzahl (z. B. durch andere Zusammensetzung des Kunststoffmaterials) um ca. 5 % ansteigt, so ist zum Zeitpunkt t = 2 der Füllungsgrad des Speichers 110 %.

Beim bekannten Verfahren (Fig. 3) wird nun, da der Ist-Füllungsgrad den Soll-Füllungsgrad übersteigt, die Drehzahl der Fördereinrichtung um ca. 5 % verkleinert, so daß das Füllvolumen zwischen t = 2 und t = 3 ca. 100 % ist. Da der Speicher nach dem Ausstoßvorgang bei 10 % zu füllen beginnt, ist zum Zeitpunkt t = 3 der Füllungsgrad des Speichers widerum 110 %. Dadurch wird die Drehzahl der Fördereinrichtung nochmals um ca. 5 % verkleinert. Das Füllvolumen beträgt jetzt ca. 95 %. Zum Zeitpunkt t = 4 ist der Füllungsgrad des Speichers also ca. 105 %, so daß die Abweichung des Ist-Füllungsgrades vom Soll-Füllungsgrad Null wird, d. h. die Drehzahl wird zum Zeitpunkt t = 4 nicht verändert. Da das füllvolumen immer noch 95 % beträgt, ist zum Zeitpunkt t = 5 der Füllungsgrad des Speichers ca. 100 %. Die Drehzahl wird also wieder um ca. 5 % vergrößert. Das Füllvolumen beträgt jetzt 100 %, so daß zum Zeitpunkt t = 6 die Drehzahl wieder um ca. 5 % erhöht wird. Zum Zeitpunkt t = 7 wird die Drehzahl nicht verändert, dadurch ist zum Zeitpunkt t = 8 der Füllungsgrad wieder 110 %, usw. Man sieht, daß diese Art der Regelung nicht stabil ist.

Beim erfindungsgemäßen Verfahren (Fig. 4) dagegen wird zum Zeitpunkt t = 2 die Drehzahl der Fördereinrichtung um ca. 10 % verkleinert, da erstens der Ist-Füllungsgrad den Soll-Füllungsgrad um 5 % übersteigt und zweitens das Füllvolumen um 5 % höher als das Ausstoßvolumen ist. Das Summensignal ist :

$$S = 110\,\% - 105\,\% + 105\,\% - 100\,\% = +\,10\,\%$$

Das Füllvolumen beträgt nach der Korrektur ca. 95 %, so daß zum Zeitpunkt t = 3 der Füllungsgrad des Speichers ca. 105 % beträgt, was dem Soll-Füllungsgrad entspricht. Da das Füllvolumen des Speichers 95 % beträgt, wird das Summensignal

$$S = 105\,\% - 105\,\% + 95\,\% - 100\,\% = -\,5\,\%$$

Die Drehzahl der Fördereinrichtung wird also um ca. 5 % vergrößert. Das Füllvolumen beträgt jetzt 100 %. Da zum Zeitpunkt t = 4 auch der Ist-Füllungsgrad gleich dem Sollfüllungsgrad ist, wird das Summensignal Null, so daß die Drehzahl der Fördereinrichtung nicht mehr verändert wird. Die Drehzahl der Fördereinrichtung ist bei diesem Beispiel zum Zeitpunkt t = 3 wieder richtig eingestellt.

**Ansprüche**

1. Verfahren zum Regeln des Füllungsgrades eines Speichers in einer Fördereinrichtung eines Extruders, bei dem in Abhängigkeit von der Drehzahl der Fördereinrichtung in dem Speicher zu Beginn eines jeden Ausstoßarbeitszyklus ein bestimmtes Volumen eines Materials bereitgestellt wird, bevor ein vorgegebenes Ausstoßvolumen des Materials aus dem Speicher ausgestoßen wird, bei dem bei jedem Arbeitszyklus zu einem bestimmten Zeitpunkt der Ist-Füllungsgrad des Speichers abgefragt wird und die Drehzahl der Fördereinrichtung nach Maßgabe des Ist-Füllungsgrades geregelt wird, dadurch gekennzeichnet, daß vor jedem Ausstoßvorgang zusätzlich zum Ist-Füllungsgrad das Füllvolumen des Speichers gemessen wird, daß die hierdurch gewonnenen Signale mit den voreingestellten Signalen für den Soll-Füllungsgrad und das Ausstoßvolumen gemäß folgender Beziehung in ein Summensignal S umgerechnet werden :

$$S = \text{Ist-Füllungsgrad} - \text{Soll-Füllungsgrad} + \text{Füllvolumen} - \text{Ausstoßvolumen},$$

und daß das Summensignal S der Drehzahl-Steuereinrichtung für die Fördereinrichtung zugeführt wird.

2. Verfahren nach Anspruch 1, dadurch gekennzeichnet, daß aus dem Summensignal ein Zeitsteuersignal gebildet wird, dessen zeitliche Länge der Amplitude des Summensignales entspricht, und daß während der Zeitdauer des Zeitsteuersignals in Abhängigkeit vom Vorzeichen des Summensignals die Drehzahl der Fördereinrichtung erhöht, bzw. vermindert wird.

3. Verfahren nach Anspruch 1 oder 2, dadurch gekennzeichnet, daß der Soll-Füllungsgrad so eingestellt wird, daß er etwa 105 % des Austoßvolumens entspricht.

4. Verfahren nach einem der Ansprüche 1 bis 3, dadurch gekennzeichnet, daß vor jedem Ausstoßvorgang die Aufnahmebereitschaft der mit dem Material zu füllenden Form abgefragt wird, und daß der Ausstoßvorgang eingeleitet wird, wenn die Form bereit ist und der Ist-Füllungsgrad des Speichers den Mindest-Füllungsgrad erreicht hat.

5. Vorrichtung zum Regeln des Füllungsgrades eines Speichers in einer Fördereinrichtung eines Extruders zum Durchführen des Verfahrens nach einem der Ansprüche 1 bis 4, mit einem Speicher zum Aufnehmen eines bestimmten Volumens eines Materials, einem im Speicher bewegbaren Ausstoßer, einem mit dem Ausstoßer in Verbindung stehenden Positionsgeber, einem Sollwertgeber zum Einstellen des Soll-Füllungsgrades des Speichers, einem an den Positionsgeber und den Sollwertgeber angeschlossenen Vergleicher und einer mit dem Vergleicherausgang verbundenen Drehzahlsteuereinrichtung für die Fördereinrichtung, dadurch gekennzeichnet, daß ein Meßwandler zum Erzeugen eines dem tatsächlichen Füllvolumen des Speichers entsprechenden Speicher-Füllvolumen-Signals sowie ein voreinstellbarer Signalgeber zum Erzeugen eines für ein vorbestimmtes Ausstoßvolumen repräsentativen Signals vorgesehen sind, und daß der Vergleicher als Summiereinrichtung (17) ausgebildet ist, dessen Plus-Eingänge mit dem Positionsgeber (14) und dem Meßwandler, und dessen Minus-Eingänge mit dem Sollwertgeber und dem Signalgeber für das Ausstoßvolumen verbunden sind.

6. Vorrichtung nach Anspruch 5, dadurch gekennzeichnet, daß der ein vorzeichenbehaftetes Summensignal liefernde Ausgang der Summiereinrichtung (17) mit dem Eingang eines Amplituden/Impulsdauer-Umsetzers (18) verbunden ist, der über einen Vorzeichendetektor (CO 1, CO II) die Ausgangsimpulse mit einem dem Summensignal entsprechenden Vorzeichen abgibt, und daß an den Ausgang des Umsetzers (18) eine vorzeichenabhängig arbeitende Servosteuereinrichtung (19) für die Drehzahlregelung der Fördereinrichtung (15, 8) angeschlossen ist.

7. Vorrichtung nach Anspruch 6, dadurch gekennzeichnet, daß der Vorzeichendetektor zwei eingangsseitig miteinander verbundene und das Summensignal aufnehmende Komparatoren (CO I, CO II) aufweist, die beide auf eine Referenzspannung gleicher Gröbe, aber jeweils entgegengesetzten Vorzeichens eingestellt sind, deren Über- bzw. Unterschreitung durch das Summensignal am Ausgang des betreffenden Komparators ein Ausgangssignal zur Folge hat, durch das jeweils ein dem betreffenden Komparator ausgangsseitig zugeordneter Schalter (S2, S3) geschlossen wird, deren Schaltkontakte jeweils in der Verbindungsleitung von einer positiven bzw. negativen Spannungsquelle zu der Servosteuereinrichtung (19) liegen.

8. Vorrichtung nach Anspruch 6 oder 7, dadurch gekennzeichnet, daß der Eingang des Vorzeichendetektors mit einem Entladeschaltkreis (C1, A4, R10) beschaltet ist, der die Amplitude des Summensignals gemäß seiner Zeitkonstanten verringert.

9. Vorrichtung nach einem der Ansprüche 6 bis 8, dadurch gekennzeichnet, daß der Eingang des Umsetzers (18) einen steuerbaren Übernahmeschalter (S1) für das Summensignal aufweist, der bei Beginn des Ausstoßvorgangs kurzzeitig angesteuert wird, um das Summensignal in den Amplituden/Impulsdauer-Umsetzer zu übernehmen.

## Claims

1. Method for the control of the filling degree of a reservoir (11) in a feed means of an extruder, wherein to a reservoir a predetermined volume of a material at the commencement of a working circle in dependence upon the rotational speed of the feed means is supplied before a predetermined output volume of the material is forced out of the reservoir, in which during each working cycle at a predetermined point in time the actual degree of filling of the reservoir is monitored and the rotational speed of the feed arrangement is controlled in accordance with the actual degree of filling, characterised in this, that before each discharge process additionally to the actual degree of filling the full volume of the reservoir is measured, that signals thus generated together with the previously determined signals for the required value of the degree of filling and the discharge volume is converted in accordance with the following relationship into a summation signal S :

S = actual degree of fill − required degree of fill + total volume − discharge volume.

and that the summation signal S is supplied to the rotational speed control device for the feed means.

2. Method according to claim 1, characterised in this, that from the summation signal there is produced a time control signal, of which time length corresponds to the amplitude of the summation signal, and that during the time period of the time control signal the rotational speed of the feed arrangement is increased or respectively reduced in dependence upon the sign of the summation signal.

3. Method according to claim 1 or 2, characterised in this, that the required degree of filling is so adjusted that it corresponds substantially to a 105 % of the discharge volume.

4. Method according to one of claims 1 to 3, characterised in this, that before each discharge operation the receptive capability of the mould to be filled with material is interrogated, and that the discharge operation is initiated, when the mould is ready and the actual degree of filling of the reservoir has reached the minimum degree of filling.

5. Apparatus for the control of the filling degree of a reservoir (11) in a feed means of an extruder for carrying out the method according to one of claims 1 to 4, with a reservoir for receiving a predetermined volume of a material, a discharge member movable within the reservoir, a position-determining generator connected to the discharge member, a required value signal generator for adjustment of the required degree of filling of the reservoir, a comparator connected to the position-determined generator and the required value output generator and a rotational speed control device for the feed means connected with the output of the comparator, characterised in this, that a measurement converter for the generation of a reservoir-full volume signal corresponding to the actual filled volume of the reservoir as well as a preadjustable signal generator for the generation of a signal representative of a predetermined discharge volume are provided, and that the comparator is constructed as summation means (17) of which the positive inputs are supplied to the position-determining generator (14) and to the measuring converter, and of which the negative outputs are supplied to the required value determining generator and to the signal generator for the output discharge volume.

6. Apparatus according to claim 5, characterised in this, that output of the summation means (17) supplying a sign-sensitive summation signal is connected with the input of an amplitude/pulse-duration inverter (18), which generates the output pulse with a sign corresponding to that of the summation signal through a sign detector (CO I, and CO II), and that at the output of the inverter (18) there is connected a sign dependent servo regulating device (19) for the rotational speed control of the feed means (15, 8).

7. Apparatus according to claim 6, characterised in this, that the sign detector has two summation-signal receiving comparators (CO I, CO II) connected to one another at the input side, which are both adjusted to a reference voltage of equal value, but at any given time of opposite sign, of which the excess or respectively the deficiency in relation to the summation signal has the result at the output of the relevant comparator of an output signal, by which a respective switch (S2, S3), connected at the output side of the relevant comparator is closed, the switch contacts of which at any given instant lie in a connection path of a positive or negative voltage source to the servo control device (19).

8. Apparatus according to claims 6 or 7, characterised in this, that the input of the sign detector is connected with a discharge circuit (C1, A4, R10), which reduces the amplitude of the summation signal in dependence upon its time constant.

9. Apparatus according to one of claims 6 to 8, characterised in this, that the input of the inverter (18) has a controllable acceptance switch (S1) for the summation signal, which exerts control for a short time at the commencement of the discharge process, in order to accept the summation signal in the amplitude/pulse duration inverter.

**Revendications**

1. Procédé destiné à régler le degré de remplissage d'un accumulateur (11) dans un mécanisme d'alimentation d'une extrudeuse, dans lequel, au début de chaque opération d'éjection, en fonction de la vitesse de rotation du mécanisme d'alimentation, un certain volume d'un matériau dans un accumulateur est réservé, avant qu'un volume prédéterminé d'éjection de ce matériau ne soit éjecté dudit accumulateur, et dans lequel, à un instant déterminé de chaque cycle de travail, le degré réel de remplissage dudit accumulateur est obtenu par interrogation et la vitesse angulaire dudit mécanisme d'alimentation étant contrôlé en fonction dudit degré réel connu, caractérisé en ce que, avant chaque opération d'éjection, le volume de remplissage de l'accumulateur est mesuré en plus de degré réel de remplissage, en ce que les signaux ainsi obtenus sont convertis, à l'aide des signaux préexistants correspondant au degré de remplissage de consigne et au volume éjecté, en un signal composite S résultant de l'équation suivante :

S = Degré réel de remplissage − Degré de remplissage de consigne + Volume de remplissage − Volume éjecté,

et en ce que ce signal composite S est ensuite transmis au dispositif de commande réglant la vitesse angulaire du mécanisme d'alimentation.

2. Procédé selon la revendication 1, caractérisé en ce que, à partir du signal composite, est formé un signal de rythme dont la durée correspond à l'amplitude dudit signal composite, et en ce que, pendant la durée de ce signal de rythme, la vitesse angulaire du mécanisme d'alimentation est accrue ou réduite, en fonction du signe dudit signal composite.

3. Procédé selon l'une des revendications 1 et 2, caractérisé en ce que le degré de remplissage de consigne est déterminé de telle sorte qu'il corresponde à environ 105 % du volume éjecté.

4. Procédé selon l'une quelconque des revendications 1 à 3, caractérisé en ce que, avant chaque processus d'éjection, on vérifie par interrogation si le moule est prêt à recevoir le matériau qui lui est destiné, et en ce que ledit processus d'éjection est déclenché lorsque ledit moule est prêt et lorsque le degré réel de remplissage de l'accumulateur a atteint la valeur du degré de remplissage minimal.

5. Dispositif à régler le degré de remplissage d'un accumulateur (11) dans un mécanisme d'alimentation d'une extrudeuse, et permettant la mise en œuvre du procédé selon l'une quelconque des revendications 1 à 4, ledit dispositif comportant un accumulateur destiné à recevoir un volume déterminé d'un matériau, un organe d'éjection ou piston, mobile dans ledit accumulateur, un indicateur de position relié audit piston, un indicateur de valeur de consigne permettant de régler le degré de remplissage de consigne dudit accumulateur, un comparateur raccordé auxdits indicateurs de position et de valeur de consigne, ainsi qu'un dispositif connecté à la sortie dudit comparateur et réglant la vitesse angulaire dudit mécanisme d'alimentation, dispositif caractérisé en ce qu'il est équipé d'un transformateur de mesure engendrant un signal de volume de remplissage qui correspond au volume effectif de remplissage de l'accumulateur, ainsi que d'un générateur préréglable de signaux, engendrant un signal correspondant à un volume prédéterminé d'éjection de matière, et en ce que ledit comparateur consiste en un totalisateur (17) dont les entrées (+) sont raccordées audit indicateur de position (14) et audit transformateur de mesure, et dont les entrées (−) sont connectées audit indicateur de valeur de consigne et audit générateur de signaux correspondant au volume éjecté.

6. Dispositif selon la revendication 5, caractérisé en ce que la sortie du totaliseur (17), délivrant un signal composite affecté d'un signe, est raccordée à l'entrée d'un convertisseur (18) durée d'amplitude-durée d'impulsion qui, par l'intermédiaire d'un détecteur de signes (CO I, CO II), délivre les impulsions de sortie dont le signe correspond à celui dudit signal composite, et en ce qu'un servo-mécanisme (19) de commande, réagissant en fonction des signes et réglant la vitesse angulaire du mécanisme d'alimentation (15, 8), est branché à la sortie dudit convertisseur (18).

7. Dispositif selon la revendication 6, caractérisé en ce que le détecteur de signes présente deux comparateurs (CO I, CO II) qui, raccordés l'un à l'autre du côté entrée et recevant le signal composite, ont tous deux une tension de référence de même grandeur, mais de signes contraires, respectivement, et en ce que, lorsque ledit signal composite a une valeur située au-delà ou en deçà de ladite tension, il en résulte, à la sortie du comparateur considéré, l'émission d'un signal de sortie qui a pour effet de fermer à chaque fois un interrupteur (S2 ; S3) coopérant avec le comparateur considéré à la sortie de ce dernier, les contacts de commutation dudit interrupteur étant respectivement situés sur le conducteur reliant une source de tension positive ou négative au servo-mécanisme (19) de commande.

8. Dispositif selon l'une des revendications 6 et 7, caractérisé en ce que l'entrée du détecteur de signes est raccordée à un circuit de décharge (C1, A4, R10) qui diminue l'amplitude du signal composite en fonction de ses constantes de temps.

9. Dispositif selon l'une quelconque des revendications 6 à 8, caractérisé en ce que l'entrée du convertisseur (18) présente un interrupteur commandable (S1) qui, recevant le signal composite, est actionné un court instant au début d'un processus d'éjection afin de recevoir ledit signal composite dans le convertisseur durée d'amplitude-durée d'impulsion.

# FIG. 1

16 — DREHZAHL-REGLER

15 — ANTRIEB

14 — POSITIONS-GEBER

+  —

5  6  7

8  9

13  11  12

3

2  1

4

P R

FIG. 2

FÜLLUNGSGRAD IN %

FÜLLEN

AUSSTOSSEN

110
105
100
10
5

ZEIT

USW.

VERHALTEN DER BEKANNTEN REGELUNG **FIG.3**

FÜLLUNGSGRAD IN %

FÜLLEN

AUSSTOSSEN

110
105
100
10
5

ZEIT

USW.

VERHALTEN DER ERFINDUNGSGEMÄSSEN REGELUNG **FIG.4**